# EUROPÄISCHE PATENTANMELDUNG

(11) **EP 1 894 486 A1**
(43) Veröffentlichungstag der Anmeldung: **05.03.2008**
(21) Anmeldenummer: 07017151.7
(22) Anmeldetag: 31.08.2007
(51) Int. Cl.: A45C 5/14, B62B 5/02

(54) **Transportvorrichtung für Behälter wie Koffer, Taschen oder Ähnlichem**

(30) Priorität: 01.09.2006 IT MI20061674
(71) Anmelder: Kirdiacheva, Irina, 10625 Berlin (DE)
(72) Erfinder: Kirdiacheva, Irina, 10625 Berlin (DE)
(74) Vertreter: Müller-Boré & Partner Patentanwälte

(57) **Zusammenfassung**

Die vorliegende Erfindung betrifft eine Transportvorrichtung für Behälter (1) wie Koffer, Taschen oder ähnliches, die dadurch gekennzeichnet sind, dass sie mindestens ein Schlitten-Element (101) besitzen, das an einem Ende des Koffers eingeklappt ist sowie mindestens ein Griff-Element (6), das zum Koffer gehört. Das Schlittenelement ist mit Gleitvorrichtungen (7) versehen, die dazu dienen, das Gleiten des Elements über eine unebene Fläche wie Treppenstufen zu gestatten. Das Schlittenelement weist mindestens zwei Positionen auf: eine eingeklappte Position, wo das Element praktisch entlang des Koffers positioniert ist, eventuell versenkbar, sowie eine ausgeklappte Position, wo das Schlittenelement im Verhältnis zur Fläche des Koffers angewinkelt ist.

## Beschreibung

Vorliegende Erfindung bezieht sich auf eine Transportvorrichtung für Behälter bzw. Behältnisse wie Koffer, Taschen oder ähnliches.

Bekannt und fast allgemein gebräuchlich sind Koffer, die mit Rollen und mit einem verlängerbaren starren Griff ausgestattet sind, und somit den Transport der Koffer gestatten, ohne sie hochzuheben, also ohne den Nutzer dazu zu zwingen, die Last des Koffers zu tragen.

Diese Koffer, auch Trolleys genannt, haben jedoch das Problem des Transports auf Treppenaufgängen nicht gelöst.

Erreicht man eine Treppe, egal ob in Richtung nach oben oder nach unten, ist es daher notwendig, den Koffer unter Benutzung des traditionellen Griffs anzuheben und das gesamte Gewicht zu tragen, um die Treppe zu überwinden.

Gewöhnlich ist es dabei auch erforderlich, den ausziehbaren Griff wieder einzuschieben, der für den Transport auf Rollen genutzt wurde, um das Anheben des Koffers zu erleichtern.

Dank dieses Transports mit Hilfe von Rollen, kommt es nicht selten vor, dass eine Person einen Koffer transportiert, den sie nicht allein hochheben kann, und die somit auch nicht dazu in der Lage ist, eine Treppe zu bewältigen.

Aufgabe der vorliegenden Erfindung ist es, eine Transportvorrichtung für Behälter wie Koffer, Taschen oder ähnliches herzustellen, welche die Einschränkungen der erwähnten bekannten Technik überwindet.

Diese Aufgabe wir erfindungsgemäß durch die Merkmale des unabhängigen Anspruchs gelöst. Bevorzugte Ausführungsformen der Erfindung sind Gegenstand der abhängigen Ansprüche.

Gemäß der Erfindung wird eine Transportvorrichtung für Behälter wie Koffer, Taschen oder Ähnlichem bereitgestellt, in der mindestens ein Gleit- bzw. Schlittenelement, das an einer Extremität bzw. Ende des zu transportierenden Korpus scharniert bzw. angelenkt ist, beinhaltet und wenigstens ein Halte- bzw. Greifelement, das mit dem besagten Korpus verbunden bzw. verbindbar ist, das besagte Schlittenelement mit ein oder mehreren Gleitelementen ausgestattet ist, die dazu dienen, dem Element selbst das Gleiten auf einer unebenen Oberfläche wie einem Treppenlauf zu ermöglichen; das besagte Schlittenelement wenigstens zwei Positionen aufweist: eine zusammengeklappte Position (erste Position), in der das Element selbst im wesentlichen bzw. grundsätzlich bündig mit dem zu transportierenden Korpus abschließt, und eine herausgezogene Position (zweite Position), in der das besagte Schlittenelement abgewinkelt bzw. in einem (von 0° oder 180° verschiedenen) Winkel (bevorzugt von etwa 10° bis etwa 80°, weiter bevorzugt von etwa 20° bis etwa 70°, am bevorzugtesten von etwa 30° bis etwa 60° relativ) zum zu transportierenden Korpus steht bzw. ausgerichtet ist.

Gemäß einer bevorzugten Ausführungsform weisen die Gleitelemente mehrere Gummirollen auf oder bestehen daraus.

Bevorzugt weisen die Gleitelemente mehrere kleine Rollen auf (oder bestehen daraus), die in parallelen Reihen angeordnet sind, die durch ebenso viele Stützachsen bestimmt sind.

Weiterhin bevorzugt, ist das besagte Schlittenelement mit Verbindungsstücken ausgestattet, wie Teleskophebeln, die mit dem besagten Korpus verankert sind und eine Feststellung des besagten Schlittenelements in einem gewählten Winkel zum besagten Korpus ermöglichen, wodurch eine ideale Auflagerung des besagten Elements auf den Stufen geschaffen wird.

Weiterhin bevorzugt ist das besagte Schlittenelement mit Verbindungsstücken ausgestattet, wie einem verlängerbaren bzw. teleskopartigen Griff, der eine Feststellung des besagten Schlittenelements am besagten Korpus in einem ausgewählten Winkel zum Korpus selbst ermöglicht, der besagte Griff dazu dient, das Gewicht des besagten Korpus zu tragen und nach Gebrauch zusammengeklappt werden kann.

Am bevorzugtesten ist die Längsseite des besagten Schlittenelements nicht kürzer, als die Länge zwischen den Kanten zweier nebeneinander liegender Stufen.

Gemäß einer weiteren bevorzugten Ausführungsform sind die besagten Gleitelemente des besagten Schlittenelements so angeordnet, dass sie eine ideale gleichmäßige Fläche bilden, die dazu dient, eine regelmäßige Bewegung des besagten Korpus auf einer unebenen Fläche, wie einem Treppenlauf, zu erleichtern.

Bevorzugt sind die Quermaße des besagten Schlittenelements ausreichend bemessen, um eine gute Stabilität des zu transportierenden Korpus zu gewährleisten.

Weiterhin bevorzugt, weist das besagte Schlittenelement zwei oder mehrere halbe Längsschlitten auf oder besteht daraus, die an den Seiten des zu transportierenden Korpus angeordnet sind und mit Verbindungselementen ausgestattet sind, welche die Verbindung des Schlittenelements mit dem besagten Korpus ermöglichen.

Bevorzugt weist der besagte zu transportierende Korpus einen Koffer oder Ähnlichem auf oder besteht daraus, der mit Rollen ausgestattet ist, die an der Kante desselben angebracht sind und dazu dienen, den Koffer auf einer ebenen Fläche zu bewegen, indem der Benutzer sich eines verlängerten ausziehbaren Griffes bedient, der auf einer gegenüber liegenden Kante angeordnet ist und das besagte Greifelement bildet.

Ferner bevorzugt ist das Schlittenelement in der Nähe der Kante des besagten, mit Rollen ausgestatteten Koffers scharniert bzw. angelenkt. Weiterhin bevorzugt kann das Schlittenelement im Koffer eingelassen werden.

Bevorzugt beinhaltet das Schlittenelement eine schräge Anschlusskante.

Am bevorzugtesten ist der bei den besagten Rädern am Korpus befestigte Rand des Schlittenelements an die Räder selbst angepasst.

Ein Vorteil der Erfindung besteht darin, eine Transportvorrichtung zu schaffen, die in der Lage ist, den Transport eines Koffers über Treppenstufen zu erleichtern.

Ein weiterer Vorteil der Erfindung besteht darin, eine Transportvorrichtung zu schaffen, die leicht und schnell herausgezogen oder zusammengeschoben werden kann, um am Anfang sowie am Ende der Treppe keine Zeit zu verlieren.

Noch ein weiterer Vorteil besteht darin, eine Transportvorrichtung zu schaffen, die versenkbar an einem Koffer angebracht ist.

Noch ein Vorteil ist es, eine Vorrichtung zu schaffen, die sich als robust und zuverlässig erweist.

Und nicht zuletzt besteht ein Vorteil darin, eine Transportvorrichtung zu schaffen, die sich nicht merklich auf das Gewicht des Produkts auswirkt, an dem sie angebracht ist.

Diese und weitere Vorteile, die im Folgenden deutlicher werden, werden durch eine Transportvorrichtung für Behälter bzw. Behältnisse wie Koffer, Taschen oder ähnliches erreicht.

Weitere Eigenschaften und Vorzüge ergeben sich vor allem aus der Beschreibung bevorzugter - aber nicht ausschließlicher - Realisierungsarten der Erfindung, die beispielhaft und nicht eingrenzend anhand der beigefügten Zeichnungen illustriert werden, wobei:
Abbildung 1 die perspektivische Ansicht eines Koffers wiedergibt, der gemäß einer bevorzugten Ausführungsform der Erfindung hergestellt wurde, und die zusammengeklappte Transportvorrichtung zeigt;
Abbildung 2 ist eine ähnliche Ansicht wie die vorherige, zeigt aber die gebrauchsfertig ausgezogene Ziehvorrichtung.
Abbildung 3 ist die perspektivische Ansicht eines Koffers, der nach einer weiteren bevorzugten Ausführungsform der Erfindung realisiert wurde, und zeigt ihn mit zusammengeklappter Ziehvorrichtung;
Abbildung 4 ist die perspektivische Ansicht eines Koffers, der nach einer weiteren bevorzugten Ausführungsform der Erfindung realisiert wurde, und zeigt ihn mit zusammengeklappter Ziehvorrichtung;
Abbildung 5 illustriert schematisch die Nutzung des mit einer Ziehvorrichtung gemäß einer bevorzugten Ausführungsform der Erfindung ausgestatteten Koffers auf einer Treppe;
Abbildung 6 ist die perspektivische Ansicht eines Koffers, der nach einer weiteren bevorzugten Ausführungsform der Erfindung hergestellt wurde;
Abbildung 7 ist die perspektivische Ansicht eines Koffers, der nach noch einer weiteren bevorzugten Ausführungsform der Erfindung hergestellt wurde.

Bezugnehmend auf die obigen Abbildungen ist die Transportvorrichtung, gemäß einer bevorzugten Ausführungsform der Erfindung, beispielhaft an einem Koffer als einem bevorzugten Behälter bzw. Behältnis angebracht, der global mit der Referenznummer 1 bezeichnet ist, und der im wesentlichen aus einem Behälter bzw. Behältnis 2 besteht, der mit den üblichen Transportgriffen versehen ist, die jeweils mit den Ziffern 3 und 4 bezeichnet sind.

Der Koffer besitzt außerdem eine Vielzahl von (z.B. 5) Rollen, die entlang einer der Kanten des Koffers angeordnet sind, und die dazu dienen, den Koffer auf einer ebenen Fläche zu bewegen, indem ihn der Nutzer mit Hilfe eines ausziehbaren, verlängerten Griffes, der auf der gegenüberliegenden Seite angebracht ist, auf die bekannte Weise zieht.

Nach der vorliegenden Erfindung beinhaltet die Transportvorrichtung ein Schlittenelement 101, das nahe der Kante aufklappbar befestigt ist, über 5 Rollen sowie Gleitelemente verfügt, die dazu dienen, das Gleiten des Schlittenelementes 101 auf einer nicht-ebenen Oberfläche, wie einer Treppe, zu gestatten.

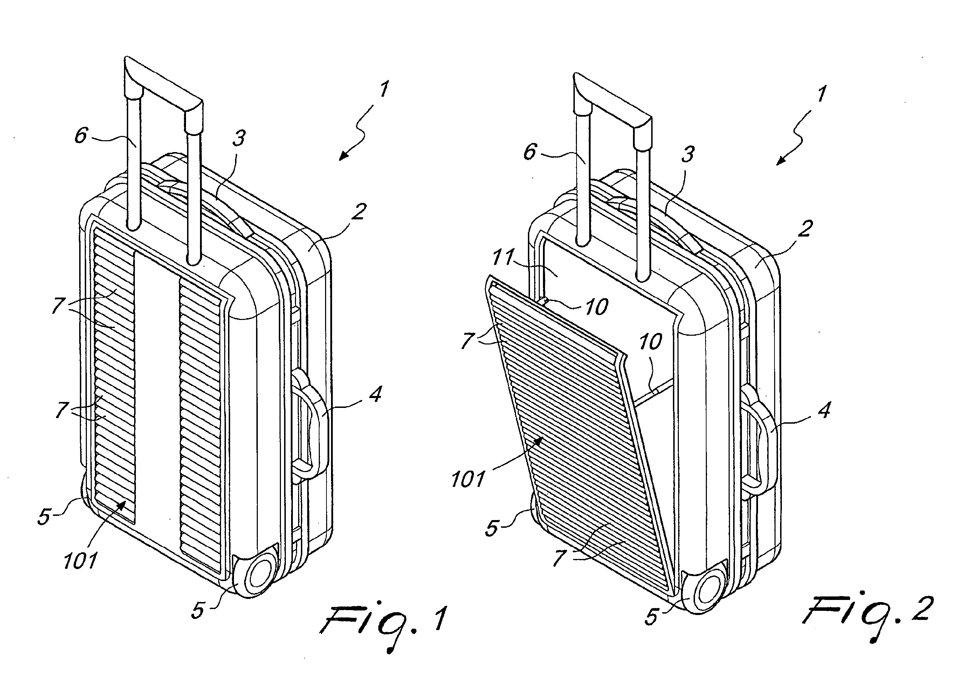

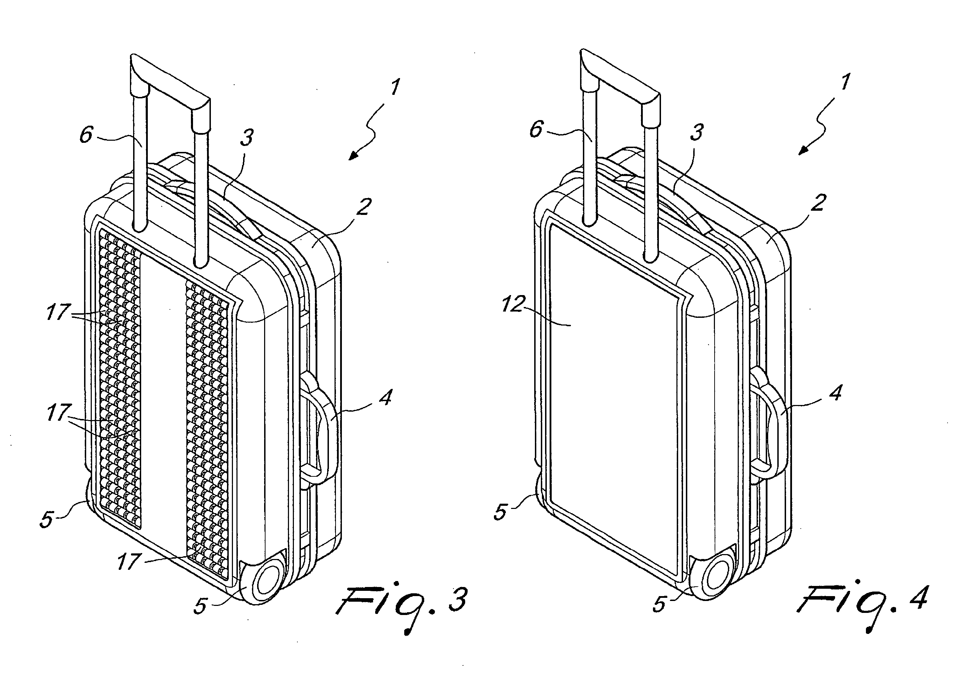

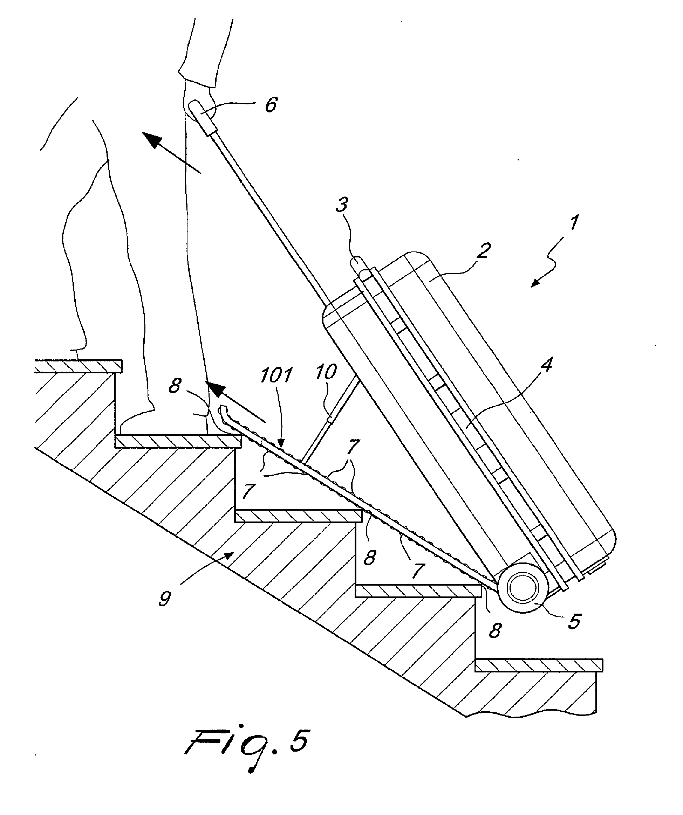

Das Schlittenelement 101 weist mindestens zwei Positionen auf: eine zusammengeklappte Stellung, zu sehen auf den Abbildungen 1,3 und 4, wo das Schlittenelement praktisch entlang der Behälterkante angeordnet ist, und eine ausgeklappte Stellung, zu sehen auf den Abbildungen 2 und 5, wo das Gleitelement mit der Fläche des Koffers einen Winkel bildet.

Die Gleitvorrichtungen des Schlittenelementes bestehen vorzugsweise aus 7 Rollen, die möglichst gummiert oder aus einem solchen Material hergestellt sind, das lärmdämpfend wirkt, und das Gleiten des Schlittenelements über die Kanten 8 der Stufen einer Treppe 9 erleichtert, wenn der Koffer auf dieser hoch oder runter gezogen wird.

Alternativ oder zusätzlich dazu können die Gleitvorrichtungen mit einer Vielzahl kleiner Rädchen 17 versehen sein (bevorzugt daraus bestehen), die in im wesentlichen parallelen Reihen angeordnet sind, die von ebenso vielen Stützträgern begrenzt sind.

Das Schlittenelement 101 wird vorzugsweise am Kofferkorpus durch Teleskophebel 10 verankert, die gestatten, das Schlittenelement 101 mit einem im Verhältnis zur Fläche 11 des Koffers gewählten Winkel zu blockieren.

Die Regulierung der Winkelposition des Schlittenelements im Verhältnis zur Kofferfläche gestattet, die Vorrichtung den Bedürfnissen des Nutzers anzupassen, insbesondere, was seine Körpergröße betrifft.

Zweckmäßigerweise besitzt das Schlittenelement eine schräge Anschlusskante, um zu vermeiden, dass sich das Element während des Transports auf einer Treppe an den Stufen verkantet. Auch der Rand des Schlittenelements, in Übereinstimmung mit den Rädern, ist in entsprechender Weise abgerundet, um eine gewisse Kontinuität zwischen der Gleitfläche des Schlittens und den Rädern zu erzeugen, um Verkantungen während des Heruntergehens zu vermeiden. Die Längenmaße des Schlittenelementes können variiert werden, vorausgesetzt, dass die Länge nicht kleiner ist, als der Abstand zwischen zwei Stufen, damit ein kontinuierlicher, wackelfreier Halt des Schlittens auf den Stufen gewährleistet ist.

Außerdem sind die Räder des Schlittenelementes zweckmäßiger Weise so angeordnet, dass sie eine gleichförmige Oberfläche bilden, um eine ordnungsgemäße Verschiebung des Korpus auf einer nicht-ebenen Fläche wie einer Treppe zu erleichtern.

Die Quermaße des Schlittenelementes können variiert werden; allerdings ist vorzuziehen, dass die Breite ausreicht, um eine gute seitliche Stabilität des Koffers zu garantieren.

Das Schlittenelement kann auch aus zwei oder mehr longitudinalen Halb-Schlitten bestehen, die an den Seiten des Koffers angebracht sind.

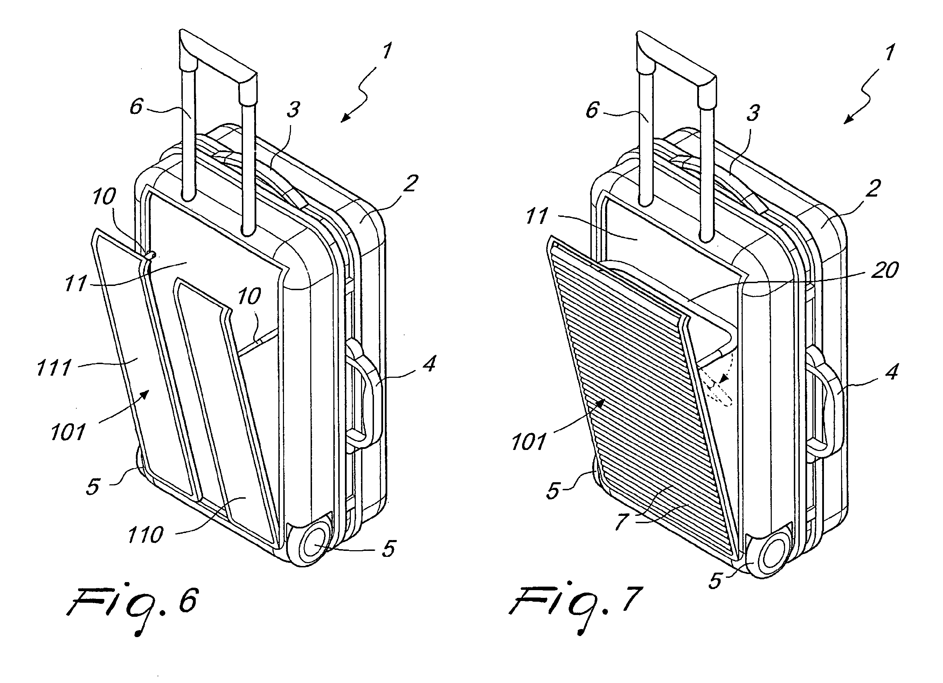

Auf Abbildung 6 ist beispielhaft ein Koffer dargestellt, der ein Schlittenelement besitzt, das aus zwei seitlichen Schlitten 110 und 111 besteht.

Das Schlittenelement 101 kann eventuell versenkbar im Koffer angebracht sein, beispielsweise durch Einfügung in eine entsprechende Aussparung und eine Abdeckung 12, sodass der Koffer eine glatte Gestalt annimmt, die sowohl unter ästhetischen Gesichtspunkten sinnvoll ist, als auch insbesondere unter dem Aspekt, dass er in die Gepäckablagen der Verkehrsmittel passt.

Abbildung 7 zeigt eine weitere Anwendungsform der Erfindung, bei der das Schlittenelement 101 mit dem Korpus durch einen verlängerbaren Griff 20 verbunden ist, der gestattet, das Schlittenelement im Verhältnis zum Korpus 2 des Koffers in einem nach Wunsch veränderbaren Winkel zu blockieren.

Der Griff 20 dient außerdem dazu, das Gewicht des Korpus 2 zu halten und ist nach dem Gebrauch zusammenfaltbar.

Die Funktionsweise der Transportvorrichtung gemäß der vorliegenden Erfindung ergibt sich intuitiv aus der oben gemachten Beschreibung.

Auf einer ebenen Fläche kann der Koffer 1 wie ein normaler Koffer auf Rollen, beziehungsweise Trolley, benutzt werden, bis man an eine Treppe gelangt, um nach oben oder unten zu gelangen.

An diesem Punkt genügt es, das Schlittenelement 101 herauszuziehen, es in der ausgezogenen Stellung zu blockieren, wie auf Abbildung 5 zu sehen, den Koffer am Griff 6 zu halten, während das Schlittenelement 101 über die Kanten 8 der Treppenstufen 9 gleitet.

Die Kraft, die erforderlich ist, um den Koffer eine Treppenrampe hochzuziehen, ist sehr viel geringer als die Kraft, die zum Tragen des gesamten Gewichts des Koffers erforderlich ist.

Selbstverständlich ist der Kraftaufwand, um die Treppe hinunterzugehen noch geringer.

Die Transportvorrichtung gemäß der Erfindung kann auch an den sogenannten "Trolleys", d.h. den faltbaren Wagen, angebracht werden, die zum Transport diverser Gegenstände dienen, vor allem von Koffern und Taschen.

Es wurde praktisch festgestellt, wie die Erfindung ihre gesetzten Ziele durch Realisierung einer Vorrichtung erreicht, die in der Lage ist, den Transport eines Koffers über eine Treppe außerordentlich zu erleichtern.

Dementsprechend wird eine Transportvorrichtung für Behälter bzw. Behältnisse wie Koffer, Taschen oder ähnliches bereitgestellt, mit mindestens einem Schlitten-Element, das an einem Ende des Koffers eingeklappt bzw. einklappbar ist, sowie mindestens einem Griff-Element, das zum Koffer gehört. Das Schlittenelement ist mit Gleitvorrichtungen versehen, die dazu dienen, das Gleiten des Elements über eine unebene Fläche wie Treppenstufen zu gestatten. Das Schlittenelement weist mindestens zwei Positionen auf: eine eingeklappte Position, wo das Element praktisch entlang des Koffers positioniert ist, eventuell versenkbar, sowie eine ausgeklappte Position, wo das Schlittenelement im Verhältnis zur Fläche des Koffers angewinkelt ist.

Die so konzipierte Erfindung kann auf jede Art von Koffer, Trolley und ganz allgemein auch auf andere Konstruktionen wie Karren, Buggys, Kinderwagen usw. angewendet werden.

Die Vorrichtung gemäß der Erfindung ist für mannigfaltige Änderungen und Variationen offen, die sich alle in den Rahmen des Erfindungskonzepts einfügen; außerdem können alle Einzelteile durch gleichwertige technische Elemente ersetzt werden.

Natürlich können Materialien oder Abmessungen jeglicher Art verwendet werden, je nach den Anforderungen und dem Stand der Technik

## Patentansprüche

1. Transportvorrichtung für Behälter wie Koffer, Taschen oder Ähnlichem, **dadurch gekennzeichnet, dass** diese mindestens ein Gleit- bzw. Schlittenelement, das an einer Extremität des zu transportierenden Korpus scharniert ist, und wenigstens ein Greifelement aufweist, das mit dem Korpus verbunden ist, das Schlittenelement mit Gleitelementen ausgestattet ist, die dazu dienen, dem Element selbst das Gleiten bzw. Bewegen auf einer unebenen Oberfläche wie einem Treppenlauf zu ermöglichen; das Schlittenelement wenigstens zwei Positionen aufweist:
eine zusammengeklappte Position, in der das Element selbst im wesentlichen bündig mit dem zu transportierenden Korpus abschließt, und
eine herausgezogene Position, in der das Schlittenelement in einem Winkel zum zu transportierenden Korpus steht.

2. Vorrichtung nach Anspruch 1, wobei die Gleitelemente ein oder mehrere Gummirollen aufweisen.

3. Vorrichtung nach einem oder mehreren vorhergehenden Ansprüchen, wobei die Gleitelemente ein oder mehrere kleine Rollen aufweisen, die in parallelen Reihen angeordnet sind, die durch ebenso viele Stützachsen bestimmt sind.

4. Vorrichtung nach einem oder mehreren vorhergehenden Ansprüchen, wobei das besagte Schlittenelement mit Verbindungsstücken ausgestattet ist, wie Teleskophebeln, die mit dem besagten Korpus verankert sind und eine Feststellung des besagten Schlittenelements in einem gewählten Winkel zum besagten Korpus ermöglichen, wodurch eine ideale Auflagerung des besagten Elements auf den Stufen geschaffen wird.

5. Vorrichtung nach einem oder mehreren vorhergehenden Ansprüchen, wobei das besagte Schlittenelement mit Verbindungsstücken ausgestattet ist, wie einem verlängerbaren Griff, der eine Feststellung des besagten Schlittenelements am besagten Korpus in einem ausgewählten Winkel zum Korpus selbst ermöglicht, der besagte Griff dazu dient, das Gewicht des besagten Korpus zu tragen und nach Gebrauch zusammengeklappt werden kann.

6. Vorrichtung nach einem oder mehreren vorhergehenden Ansprüchen, wobei die Längsseite des besagten Schlittenelements nicht kürzer ist, als die Länge zwischen den Kanten zweier nebeneinander liegender Stufen.

7. Vorrichtung nach einem oder mehreren vorhergehenden Ansprüchen, wobei die besagten Gleitelemente des besagten Schlittenelements so angeordnet sind, dass sie eine ideale gleichmäßige Fläche bilden, die dazu dient, eine regelmäßige Bewegung des besagten Korpus auf einer unebenen Fläche, wie einem Treppenlauf, zu erleichtern.

8. Vorrichtung nach einem oder mehreren vorhergehenden Ansprüchen, wobei die Quermaße des besagten Schlittenelements ausreichend bemessen sind, um eine gute Stabilität des zu transportierenden Korpus zu gewährleisten.

9. Vorrichtung nach einem oder mehreren vorhergehenden Ansprüchen, wobei das besagte Schlittenelement aus zwei oder mehreren halben Längsschlitten besteht, die an den Seiten des zu transportierenden Korpus angeordnet sind und mit Verbindungselementen ausgestattet sind, welche die Verbindung des Schlittenelements mit dem besagten Korpus ermöglichen.

10. Vorrichtung nach einem oder mehreren vorhergehenden Ansprüchen, wobei der besagte zu transportierende Korpus aus einem Koffer oder Ähnlichem besteht, der mit Rollen ausgestattet ist, die an der Kante desselben angebracht sind und dazu dienen, den Koffer auf einer ebenen Fläche zu bewegen, indem der Benutzer sich eines verlängerten ausziehbaren Griffes bedient, der auf einer gegenüber liegenden Kante angeordnet ist und das besagte Greifelement bildet.

11. Vorrichtung nach einem oder mehreren vorhergehenden Ansprüchen, wobei das Schlittenelement in der Nähe der Kante des besagten, mit Rollen ausgestatteten Koffers scharniert ist.

12. Vorrichtung nach einem oder mehreren vorhergehenden Ansprüchen, wobei das Schlittenelement im Koffer eingelassen werden kann.

13. Vorrichtung nach einem oder mehreren vorhergehenden Ansprüchen, wobei das Schlittenelement eine schräge Anschlusskante beinhaltet.

14. Vorrichtung nach einem oder mehreren vorhergehenden Ansprüchen, wobei der bei den besagten Rädern am Korpus befestigte Rand des Schlittenelements an die Räder selbst angepasst ist.
